# EUROPEAN PATENT SPECIFICATION

(11) **EP 2 445 995 B1**
(45) Date of publication and mention of the grant of the patent: **04.03.2020**
(21) Application number: 10765840.3
(22) Date of filing: 28.06.2010
(51) Int. Cl.: C10G 29/20, B01D 53/48, C01B 17/16, E21B 43/00, C07C 7/148, B01D 53/52, C09K 8/52

(54) **SCAVENGER COMPOSITIONS AND THEIR USE**
SCAVENGERZUSAMMENSETZUNGEN UND IHRE VERWENDUNG
COMPOSITIONS PURIFICATRICES ET LEUR UTILISATION

(30) Priority: 26.06.2009 EP 09251661
(43) Date of publication of application: 02.05.2012
(73) Proprietor: Schlumberger Norge AS, 4056 Tananger (NO)
(72) Inventor: ROSNES, Johannes, 5239 Racial (NO); GRINROD, Anders, 4322 Sandnes (NO)
(74) Representative: Schlumberger Intellectual Property Department
(86) International application number: PCT/IB2010/002234
(87) International publication number: WO 2010/150107

(56) References cited:
- WO-A1-2008/124404
- US-A- 3 527 593
- US-A- 5 922 794
- US-A- 6 063 346
- US-A1- 2005 238 556
- US-A1- 2006 124 302

## Description

This invention has to do with methods and compositions for the treatment of fluids to remove or reduce hydrogen sulfide.

### BACKGROUND

In the oil and gas industries, it is well known to treat fluid bodies and fluid streams with scavengers to remove hydrogen sulfide (H₂S). H₂S is often present in processes involving the recovery, production or handling of hydrocarbons such as petroleum, petroleum gas and their derivatives. The H₂S may be present not only in or above the hydrocarbon fluid but also in associated water, e.g. in sea water or underground water mixed with the hydrocarbon.

The acidity and toxicity of H₂S necessitate its reduction to low levels. To remove it, various processes are known and one of these is to treat the fluid or fluids concerned with a scavenger substance which reacts selectively with the H₂S. A wide range of scavenger compounds is known for this purpose. One group of compounds of established effectiveness is the 1, 3, 5-tri-substituted hexahydrotriazines. The use of such triazine scavengers is disclosed in for example US 5128049 and US574 4024.

Because the use of triazine derivative scavengers is a non-regenerable process, i.e. the scavengers are consumed in the process, it is desirable to maximise the effectiveness of the scavenger in removing H₂S in order to minimise the cost of the procedure. It is also in any case generally desirable to improve or enhance the effectiveness of triazine derivative scavengers in removing H₂S.

In US5744024, a triazine derivative scavenger is disclosed to be used in combination with a quaternary ammonium compound to enhance its scavenging ability.

US7264786 describes scavenging, especially for mercaptans in addition to H₂S, using triazine derivatives substituted with tertiary amino groups, morpholines, piperazines, alkanolamines, amine oxides or polyamines.

### SUMMARY OF THE INVENTION

The aim herein is to provide new and useful methods and compositions for scavenging H₂S from fluid bodies or fluid streams, such as those mentioned above, using a triazine scavenger. A particular aspect is to combine the triazine scavenger with an auxiliary substance to enhance its effectiveness, and desirably in a synergistic manner.

A further object or aspect of the invention is the provision of a composition comprising a triazine scavenger in admixture with a said auxiliary substance, preferably as a compatible (miscible) mixture, which can be introduced or injected as a mixture into the fluid to be treated to provide a convenient process with an appropriate predetermined ratio of the scavenger and auxiliary enhancer.

The present inventors have discovered that amine oxides, used in combination with triazine scavengers, can enhance their effectiveness in removing H₂S. A synergistic effect may be achieved. In embodiments, the enhancement achieved is superior to that achieved with quaternary ammonium compounds known in the prior art. Moreover we have found that amine oxides effective to enhance scavenging can also be compatible or miscible with the triazine scavenger, especially in aqueous preparations or conditions, so that a corresponding mixture composition can be conveniently stored and used without difficulties of settling or separation.

Thus, in a first aspect the present invention provides a method according to claim 1 of treating a fluid to reduce the level of H₂S therein, comprising introducing into the fluid a triazine H₂S scavenger compound and an amine oxide. The amine oxide can be effective to enhance the scavenging effect of the triazine scavenger, preferably synergistically.

A further aspect is the use according to claim 11 of an amine oxide to enhance the H₂S scavenging effect of a triazine H₂S scavenger, in a method in which the H₂S scavenger and amine oxide are introduced into a fluid in which the H₂S content is to be reduced.

A further aspect of the present invention is a scavenger composition according to claim 7 comprising a triazine H₂S scavenger in combination with amine oxide. In preferred embodiments the amine oxide and triazine derivative are fully miscible in the mixture. Desirably the mixture is a fully-miscible aqueous preparation, such as a clear solution.

Amine oxide surface active (surfactant) compounds are readily commercially available. Being substantially nonionic compounds, they can have an advantage relative to quaternary ammonium cationic surfactants (e.g. as proposed in US5744024) of lower sensitivity to the presence of other ions in solution. Also they are likely to have lower aquatic toxicity.

### DETAILED DESCRIPTION: OPTIONS AND PREFERENCES

In the methods of the invention, the combination of triazine scavenger and amine oxide is brought into contact with a body of liquid and/or gas containing hydrogen sulfide to be reduced or removed. The liquid or gas body may be a static body or a flowing stream. It may comprise or consist of petroleum, petroleum product, natural gas, liquefied petroleum gas or other type of oil fraction or refined oil. Moreover the fluid body or stream may comprise water, such as underground water or sea water involved in a hydrocarbon recovery process such as oil drilling.

The point at which the scavenger combination is introduced into the fluid may be determined in accordance with conventional practice, While an enhancement effect may still be achieved by introducing the triazine scavenger and the amine oxide separately, it is preferred to use and introduce them as a mixture as described herein.

Triazine scavengers are well known. According to the aspects the triazine scavengers are compounds of the formula wherein each R is a substituted or unsubstituted hydrocarbon radical, 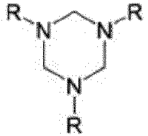 desirably selected from
C₁₋₄ hydrocarbon, preferably alkyl, more preferably methyl or ethyl;
C₁₋₆ hydroxy-substituted or amino-substituted alkyl, preferably -CH₂CH₂OH;
alkoxy-substituted hydrocarbon, preferably with C₁₋₆ alkoxy substituted on C₁₋₆ alkyl.

Preferably all three R groups are the same, since such compounds are readily synthesised and commercially available. Particularly preferred compounds are those in which R is -CH₂CH₂OH or -CH₃.

These compounds are commercially available, either substantially pure or as solutions, and especially aqueous solutions are convenient and preferred, e.g. at 30 to 80 wt% concentration.

The suitable amine oxides may be selected from various readily-available surface active tertiary amine oxides. This class of compounds is well known to the skilled person in the field of nonionic surfactants.

Typically they accord with the conventional formula

R¹R²R³N-O

in which R¹ is a long chain structure described below and R² and R³ are desirably selected independently from C₁₋₄ optionally substituted hydrocarbon, preferably alkyl, more preferably methyl, ethyl or 2-hydroxyethyl.

Alternatively R² and R³ may be divalent hydrocarbon groups, optionally interrupted by heteroatom, which join to form a ring in combination with the N atom, e.g. a morpholino ring. Additionally it is possible that one or both of R² and R³ may be a divalent group, e.g. alkylene, connecting to the N atom of a further amine oxide moiety. On said further amine oxide moiety the other groups on N be selected freely from the options given here for R², R³ and R¹. Optional substituents above include any of halogen, hydroxyl and amino.

R¹ in the above formula is a lipophilic group with a long chain structure, as is well known. Typically it contains from 6 to 24 carbons, more preferably up to 18 carbon atoms. As is also well known, the moieties R¹ in a single composition may represent a range of different length long-chain groups corresponding to those in naturally occurring fats and oils, such as coconut oil or tallow. It is usually preferable in the present invention to avoid substantial proportions of very long 10 chain moieties (e.g. C₁₆ and above), because the shorter- chain molecules tend give a better aqueous solubility or miscibility with the triazine compound.

Preferred amine oxides are those in which R² and R³ are both methyl groups or are both 2-hydroxyethyl groups. Preferred amine oxides are liquid at room temperature (20°C). Usually the preferred amine oxides are fully water-soluble at 20°C, more preferably at 15°C, 10°C or 5°C, up to at least 10 wt% concentration. Moreover the mixture composition according to the invention is desirably stable i.e. without separation of the amine oxide or triazine, at 15°C, more preferably at 10°C, more preferably at 5°C.

This is of practical importance in providing a mixture that is compositionally stable even after storage or delivery under cold conditions.

Desirably the amine oxide is used at at least 0.2 parts, usually from 0.5 to 100 parts, more preferably 1 to 50 parts, still more preferably 1 to 30, 2 to 20 or 2 to 10 parts by weight relative to 100 parts of triazine compound. These preferred proportions also apply when the two components are present in a mixture. Upper and lower limits are of course independent, having distinct technical criteria.

The mixture may sometimes consist effectively of only the mentioned active ingredients, but usually it comprises one or more additional solvents. Preferably, the solvent is or includes water. It may be a mixture of water and water-miscible organic solvent, e.g. C₁₋₄ alcohol. This solvent component of the mixture may derive from solvent present in one or both of the triazine and amine oxide compositions as originally supplied. Or, additional solvent may be added to facilitate formation of a fully dissolved mixture, or to facilitate introduction of the mixture into the system to be treated.

Desirably the mixture is a clear solution at 25°C. We have found that, conveniently, readily-available amine oxide surfactants which are effective to enhance the scavenger capability of triazine compounds can be selected to be fully miscible in a clear solution with relevant triazine compounds, leading to great convenience in handling the mixture and in ensuring that it is deployed with the intended ratio between the triazine and amine oxide components.

It will be appreciated that the method may use and the mixture may contain more than one different amine oxide compound and /or more than one different triazine compound, within the principles of the present invention. However in many cases a mixture of a single one of each is effective, and convenient to prepare.

According to the nature of the fluid to be treated with the scavenger combination, and the type of apparatus or apparatus stage in which the scavenger treatment is to be carried out, one or more additional components may be administered at the same time and/or included in the mixture according to the invention. This may be for example a corrosion inhibitor or the like, subject to effectiveness and compatibility in the system.

In general, routine testing at room temperature can readily confirm the mutual compatibility of the contemplated triazine and amine oxide components and any other components/solvents intended to be combined. A room temperature test is usually valid because one virtue of the compatible mixture is the predetermined ratio of the main components, and this advantage can be exploited provided that the mixture components remain fully mixed (in solution) at least up until they enter the fluid system for reaction. However a more stringent test e.g. at 10°C or 5°C may be applied.

As regards the overall amount to be used for the scavenging treatment, the skilled person can follow conventional practice regarding the triazine compound used, while expecting to be able to use somewhat less in view of the enhancing effect of the amine oxide additive. A typical amount is in the range from 1 or 2 to 50 ppm of mixture per 1 ppm of H₂S.

### DESCRIPTION OF PREFERRED EMBODIMENTS

Amine oxide surfactants and comparative quaternary ammonium cationic surfactants were tested to assess their compatibility and their ability to enhance the H₂S -scavenging effect of a triazine scavenger.

### Experimental Procedure

The triazine scavenger used was 1,3,5-tri(2-hydroxyethyl]-hexahydro-1,3,5-triazine, provided as a 50% aqueous solution (HR-2510 from MI Swaco). The test procedure assessed the ability of the scavenger combinations to reduce H₂S in a mixed seawater/oil phase medium in the laboratory.

A 1000 ml vessel was filled with seawater/oil phase (70:30). The oil phase used in the experiment was a de-aromatised hydrocarbon fluid (Exxsol139 D80). Carbon dioxide was bubbled through the mixture until the pH reached below 5.0. This took about 10 minutes, Sodium sulfide (Na₂S) solution was added to develop H₂S gas. The H₂S level was measured in the gas space in a conventional way (Drager Pac® III S electronic gas monitor). When a stable level of H₂S gas was reached the test scavenger composition was added and the H₂S level in ppm was recorded over a 5 minute period.

For most purposes, the recommended dosing rate for this particular triazine is from 4 to 20 ppm solution for each ppm of H₂S in the system. In order to give scope for showing any enhancement, i.e. to avoid saturating the effect, the present experiments used a value near the bottom of the recommended range: 5 ppm triazine solution per 1 ppm of H₂S.

The test surfactants are commercial products, provided as compositions including a diluent. In the experiments the triazine solution : (surfactant composition) ratio was always 95:5 by weight. The measured enhancement effects were then corrected in proportion to the percentage of active ingredient in the surfactant composition, to provide a comparison of enhancement activities.

The test surfactants were the following.

### Amine Oxide 1

C₁₂₋₁₈ alkyldimethylamine oxide ("Aromox® B-W 500" from Akzo Nobel, 30 wt% in water, C₁₂ 35%, C₁₄ 14 %, C₁₆-C₁₈ 50%).

### Amine Oxide 2

Cocobis(2-hydroxyethyl) amine oxide ("Aromox® C/12-W" from Akzo Nobel, 31 wt% in water, C₈ 5%, C₁₀ 6%, C₁₂ 50%, C₁₄ 19%, C₁₆ 10%, C₁₈ 10%).

### Amine Oxide 3

Tetradecyldimethylamine oxide ("Aromox®" 14 D-W 970" from Akzo Nobel, 25% in water, C₁₄ 97%).

### Quaternary 1

Di(hydrogenated tallow)dimethylammonium chloride ("Arquad 2HT-75" from Akzo Nobel, 75wt % in isopropanol/water), as used in examples of US5744024.

### Quaternary 2

Mono (hydrogenated tallow) trimethylammonium chloride ("Arquad T-50 HFP" from Akzo Nobel, 50% in isopropanol/water).

### Compatibility

In the test mixtures at 95:5, the compatibilities were as follows.

| | |
|---|---|
| Amine oxide 1 | compatible, clear solution |
| Amine oxide 2 | compatible, clear solution |
| Amine oxide 3 | compatible, clear solution |
| Quaternary 1 | not compatible at 20°C or 60°. Heated to 60°C for several hours and mixed for testing, but still not compatible. |
| Quaternary 2 | compatible, clear solution |

### Examples and Comparative Examples

Table 1 shows the measured data, firstly for three reference runs using the aqueous triazine scavenger HR-2510 by itself, and then with two runs using the 95:5 mixture thereof with Amine Oxide 1.

**Table 1**

| **Time (min)** | **Triazine (Run 1)** | **Triazine (Run 2)** | **Triazine (Run 3)** | **+ Amine Oxide 1 (Run 1)** | **+ Amine Oxide 1 (Run 2)** |
|---|---|---|---|---|---|
| 0.0 | 94 | 71 | 98 | 98 | 80 |
| 0.5 | 46 | 36 | 32 | 42 | 35 |
| 1.0 | 14 | 12 | 10 | 2 | 9 |
| 1.5 | 11 | 13 | 12 | 0 | 8 |
| 2.0 | 16 | 20 | 15 | 0 | 11 |
| 2.5 | 18 | 22 | 17 | 2 | 13 |
| 3.0 | 20 | 23 | 18 | 4 | 14 |
| 3.5 | 21 | 24 | 19 | 6 | 15 |
| 4.0 | 22 | 24 | 20 | a | 15 |
| 4.5 | 21 | 23 | 20 | 10 | 15 |
| 5.0 | 24 | 22 | 20 | 12 | 15 |

Table 2 shows corresponding data for Amine Oxides 2 and 3.

**Table 2**

| **Time (min)** | **+ Amine Oxide 2 (Run 1)** | **+ Amine Oxide 2 (Run 2)** | **+ Amine Oxide 3 (Run 1)** | **+ Amine Oxide 3 (Run 2)** |
|---|---|---|---|---|
| 0.0 | 98 | 98 | 97 | 98 |
| 0.5 | 48 | 39 | 46 | 52 |
| 1.0 | 8 | 6 | 10 | 11 |
| 1.5 | 5 | 5 | 4 | 6 |
| 2.0 | 9 | 8 | 6 | 8 |
| 2.5 | 11 | 9 | 9 | 9 |
| 3.0 | 12 | 9 | 10 | 12 |
| 3.5 | 13 | 10 | 12 | 13 |
| 4.0 | 13 | 10 | 13 | 15 |
| 4.5 | 13 | 9 | 13 | 15 |
| 5.0 | 13 | 9 | 13 | 16 |

Table 3 shows corresponding data for the 95:5 mixtures with the cationic surfactants Quaternary 1 and Quaternary 2.

**Table 3**

| **Time (min)** | **+ Quaternary 1 (Run 1)** | **+ Quaternary 1 (Run 2)** | **+ Quaternary 2 (Run 1)** | **+ Quaternary 2 (Run 2)** |
|---|---|---|---|---|
| 0.0 | 82 | 89 | 98 | 97 |
| 0.5 | 51 | 39 | 57 | 2 8 |
| 1.0 | 2 | 0 | 22 | 6 |
| 1.5 | 0 | 0 | 15 | 6 |
| 2.0 | 2 | 0 | 13 | 8 |
| 2.5 | 6 | 1 | 14 | 9 |
| 3.0 | 10 | 3 | 14 | 9 |
| 3.5 | 12 | 5 | 15 | 9 |
| 4.0 | 15 | 7 | 15 | 9 |
| 4.5 | 16 | 8 | 15 | 8 |
| 5.0 | 17 | 10 | 15 | 8 |

These data were then corrected, taking account of the percentage of active fraction in the surfactant compositions, and compared against the data for HR-2510 alone to give the comparative data as set out in the following Table 4.

**Table 4**

| **Test Surfactant** | **Delta ppm** | **Active Fraction** | **Corrected Delta ppm** | **Time to max difference** |
|---|---|---|---|---|
| Amine Oxide 1 | 10.8 | 0.30 | 36.0 | 3.5 |
| Amine Oxide 2 | 11.0 | 0.30 | 35.5 | 5 |
| Amine Oxide 3 | 7.5 | 0.25 | 30.0 | 3 |
| Quaternary 1 | 16.0 | 0.75 | 21.3 | 2 |
| Quaternary 2 | 10.5 | 0.50 | 21.0 | 5 |

In the above Table 4:
- "delta ppm" is the maximum difference (improvement in H₂S reduction) achieved by the triazine/surfactant mixture relative to the triazine alone;
- "active fraction" is the proportion of surfactant in the surfactant composition used;
- "corrected delta ppm" is the delta ppm value adjusted proportionately to the active fraction, to indicate an expected delta ppm at equal surfactant levels;
- "time to max difference" is the time taken in minutes to reach the maximum enhancement (i.e. the maximum difference between values with the triazine/surfactant combination and triazine alone).

It can be seen from the results that the amine oxide surfactants were effective to enhance the H₂S -scavenging effect of the triazine scavenger. Moreover they were more effective in this respect than either of the cationic ammonium surfactants. Additionally, they were fully compatible with the triazine to make an easily-handled mixture.

Quaternary 1, used in the above-mentioned US 5744024, is not compatible at all and is therefore not convenient for practical use, although it did show a rapid enhancement effect as suggested in US 5744024. The other cationic surfactant, Quaternary 2, was compatible and produced a clear solution mixture, but its enhancement activity was markedly lower than the amine oxide enhancers.

Accordingly, the present invention provides a useful and unexpectedly effective addition to the range of means available to the skilled person for reducing hydrogen sulfide using a scavenge process.

## Claims

1. A method of treating a fluid to reduce the level of H₂S therein, comprising introducing into the fluid a triazine scavenger compound and an amine oxide, in which the triazine scavenger compound and the amine oxide are provided as a mixture which is introduced into said fluid, in which the triazine scavenger is a compound of the formula 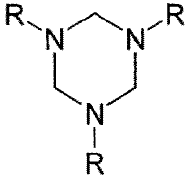 wherein each R is selected independently from
C₁₋₄ hydrocarbon radicals, C₁₋₆ hydroxy-substituted or amino-substituted alkyls, and alkoxy-substituted hydrocarbon radicals.

2. The method of claim 1 in which R is -CH₂CH₂OH or -CH₃.

3. The method of claim 1 or 2 in which the amine oxide accords with the formula
R¹R²R³N→O
in which R¹ is a lipophilic group with a long chain structure having from 6 to 24 carbons, and R² and R³ are selected independently from C₁₋₄ optionally substituted hydrocarbon groups (provided that one or both of R² and R³ may be a divalent group connecting to the N atom of a further amine oxide moiety in which said further amine oxide moiety the other substituents on NI may be selected from the options given here for R², R³ and R¹), or R² and R³ are divalent hydrocarbon groups, optionally interrupted by heteroatom, which join to form a ring in combination with the N atom,

4. The method of any one of the preceding claims in which both R² and R³ are methyl, ethyl or 2- hydroxyethyl and R¹ is alkyl of from 6 to 18 carbon atoms.

5. The method of claim 1 in which said mixture is a compatible aqueous mixture of the triazine scavenger compound and amine oxide.

6. The method of any one of the preceding claims in which the triazine scavenger compound and amine oxide are used at a ratio of from 0.5 to 20 parts by weight amine oxide to 100 parts by weight of triazine.

7. A scavenger composition comprising a mixture of triazine H₂S scavenger with amine oxide in which the triazine H₂S scavenger is a compound of the formula 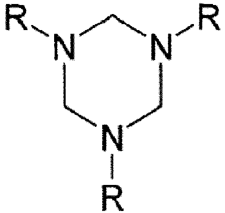 wherein each R is selected independently from
C1-4 hydrocarbon radicals, C1-6 hydroxy-substituted or amino-substituted alkyls, and alkoxy-substituted hydrocarbon radicals.

8. The scavenger composition of claim 7 in which R is -CH₂CH₂OH or -CH₃.

9. The scavenger composition of claim 7 or 8 in which the amine oxide accords with the formula
R¹R²R³N→O
in which R¹ is a lipophilic group with a long chain structure having from 6 to 24 carbons, and R² and R³ are selected independently from C₁₋₄ optionally substituted hydrocarbon groups (provided that one or both of R² and R³ may be a divalent group connecting to the N atom of a further amine oxide moiety in which said further amine oxide moiety the other substituents on NI may be selected from the options given here for R², R³ and R¹), or R² and R³ are divalent hydrocarbon groups, optionally interrupted by heteroatom, which join to form a ring in combination with the N atom, preferably in which both R² and R³ are methyl, ethyl or 2- hydroxyethyl and R¹ is alkyl of from 6 to 18 carbon atoms.

10. The scavenger composition of claim 7, 8 or 9 in which said mixture is a compatible aqueous mixture of the triazine scavenger compound and amine oxide and/or in which the triazine scavenger compound and amine oxide are used at a ratio of from 0.5 to 20 parts by weight amine oxide to 100 parts by weight of triazine.

11. A use of an amine oxide to enhance the H₂S scavenging effect of a triazine H₂S scavenger, in a method in which the H₂S scavenger and amine oxide are introduced as a mixture into a fluid in which the H₂S content is to be reduced, in which the triazine scavenger is a compound of the formula 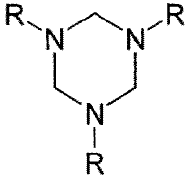 wherein each R is selected independently from
C₁₋₄ hydrocarbon radicals, C₁₋₆ hydroxy-substituted or amino-substituted alkyls, and alkoxy-substituted hydrocarbon radicals.

12. The use of claim 11 in which R is -CH₂CH₂OH or -CH₃.

13. The use of claim 11 or 12 in which the amine oxide accords with the formula
R¹R²R³N→O
in which R¹ is a lipophilic group with a long chain structure having from 6 to 24 carbons, and R² and R³ are selected independently from C₁₋₄ optionally substituted hydrocarbon groups (provided that one or both of R² and R³ may be a divalent group connecting to the N atom of a further amine oxide moiety in which said further amine oxide moiety the other substituents on NI may be selected from the options given here for R², R³ and R¹), or R² and R³ are divalent hydrocarbon groups, optionally interrupted by heteroatom, which join to form a ring in combination with the N atom, preferably in which both R² and R³ are methyl, ethyl or 2- hydroxyethyl and R¹ is alkyl of from 6 to 18 carbon atoms.

14. The use according to claim 11, 12, or 13 in which said mixture is a compatible aqueous mixture of the triazine scavenger compound and amine oxide and/or in which the triazine scavenger compound and amine oxide are used at a ratio of from 0.5 to 20 parts by weight amine oxide to 100 parts by weight of triazine.

## Patentansprüche

1. Verfahren zur Behandlung eines Fluids, um dessen H₂S-Gehalt zu verringern, umfassend ein Einbringen einer Triazin-Scavenger-Verbindung und eines Aminoxids in das Fluid, wobei die Triazin-Scavenger-Verbindung und das Aminoxid als Gemisch bereitgestellt werden, das in das Fluid eingebracht wird, wobei der Triazin-Scavenger eine Verbindung der Formel 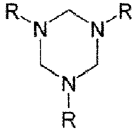 ist,
in der die R jeweils unabhängig voneinander ausgewählt sind aus C₁₋₄-Kohlenwasserstoffgruppen, C₁₋₆-hydroxy- oder aminosubstituierten Alkylen und alkoxysubstituierten Kohlenwasserstoffgruppen.

2. Verfahren nach Anspruch 1, wobei R -CH₂CH₂OH oder -CH₃ ist.

3. Verfahren nach Anspruch 1 oder 2, wobei das Aminoxid der Formel
R¹R²R³N→O
entspricht, in der R¹ eine lipophile Gruppe mit einer langkettigen Struktur mit 6 bis 24 Kohlenstoffen ist und R² und R³ jeweils unabhängig voneinander ausgewählt sind aus C₁₋₄-gegebenenfalls substituierten Kohlenwasserstoffgruppen (mit der Maßgabe, dass eines oder beide von R² und R³ eine zweiwertige Gruppe sein können, die mit dem N-Atom eines weiteren Aminoxidteils verbunden ist, wobei in dem weiteren Aminoxidteil die anderen Substituenten an NI ausgewählt sein können aus den hier für R², R³ und R¹ angegebenen Möglichkeiten), oder R² und R³ zweiwertige, gegebenenfalls durch ein Heteroatom unterbrochene Kohlenwasserstoffgruppen sind, die sich in Kombination mit dem N-Atom zu einem Ring verbinden,

4. Verfahren nach einem der vorhergehenden Ansprüche, wobei R² und R³ beide Methyl, Ethyl oder 2-Hydroxyethyl sind und R¹ Alkyl mit 6 bis 18 Kohlenstoffatomen ist.

5. Verfahren nach Anspruch 1, wobei das Gemisch ein kompatibles wässriges Gemisch aus der Triazin-Scavenger-Verbindung und dem Aminoxid ist.

6. Verfahren nach einem der vorhergehenden Ansprüche, wobei die Triazin-Scavenger-Verbindung und das Aminoxid in einem Verhältnis von 0,5 bis 20 Gewichtsteilen Aminoxid zu 100 Gewichtsteilen Triazin verwendet werden.

7. Scavenger-Zusammensetzung umfassend ein Gemisch aus Triazin-H₂S-Scavenger mit Aminoxid, wobei der Triazin-H₂S-Scavenger eine Verbindung der Formel 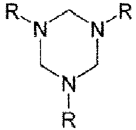 ist,
in der die R jeweils unabhängig voneinander ausgewählt sind aus C₁₋₄-Kohlenwasserstoffgruppen, C₁₋₆-hydroxy- oder aminosubstituierten Alkylen und alkoxysubstituierten Kohlenwasserstoffgruppen.

8. Scavenger-Zusammensetzung nach Anspruch 7, wobei R -CH₂CH₂OH oder -CH₃ ist.

9. Scavenger-Zusammensetzung nach Anspruch 7 oder 8, wobei das Aminoxid der Formel
R¹R²R³N→O
entspricht, in der R¹ eine lipophile Gruppe mit einer langkettigen Struktur mit 6 bis 24 Kohlenstoffen ist und R² und R³ jeweils unabhängig voneinander ausgewählt sind aus C₁₋₄-gegebenenfalls substituierten Kohlenwasserstoffgruppen (mit der Maßgabe, dass eines oder beide von R² und R³ eine zweiwertige Gruppe sein können, die mit dem N-Atom eines weiteren Aminoxidteils verbunden ist, wobei in dem weiteren Aminoxidteil die anderen Substituenten an NI ausgewählt sein können aus den hier für R², R³ und R¹ angegebenen Möglichkeiten), oder R² und R³ zweiwertige, gegebenenfalls durch ein Heteroatom unterbrochene Kohlenwasserstoffgruppen sind, die sich in Kombination mit dem N-Atom zu einem Ring verbinden, vorzugsweise in der R² und R³ beide Methyl, Ethyl oder 2-Hydroxyethyl sind und R¹ Alkyl mit 6 bis 18 Kohlenstoffatomen ist.

10. Scavenger-Zusammensetzung nach Anspruch 7, 8 oder 9, wobei das Gemisch ein kompatibles wässriges Gemisch aus der Triazin-Scavenger-Verbindung und dem Aminoxid ist, und/oder wobei die Triazin-Scavenger-Verbindung und das Aminoxid in einem Verhältnis von 0,5 bis 20 Gewichtsteilen Aminoxid zu 100 Gewichtsteilen Triazin verwendet werden.

11. Verwendung eines Aminoxids zur Verbesserung der H₂S-Scavenger-Wirkung eines Triazin-H₂S-Scavengers, in einem Verfahren, in welchem der H₂S-Scavenger und das Aminoxid als Gemisch in ein Fluid eingebracht werden, dessen H₂S-Gehalt reduziert werden soll, wobei der Triazin-Scavenger eine Verbindung der Formel 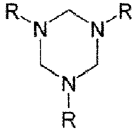 ist,
in der die R jeweils unabhängig voneinander ausgewählt sind aus C₁₋₄-Kohlenwasserstoffgruppen, C₁₋₆-hydroxy- oder aminosubstituierten Alkylen und alkoxysubstituierten Kohlenwasserstoffgruppen.

12. Verwendung nach Anspruch 11, wobei R -CH₂CH₂OH oder -CH₃ ist.

13. Verwendung nach Anspruch 11 oder 12, wobei das Aminoxid der Formel
R¹R²R³N→O
entspricht, in der R¹ eine lipophile Gruppe mit einer langkettigen Struktur mit 6 bis 24 Kohlenstoffen ist und R² und R³ jeweils unabhängig voneinander ausgewählt sind aus C₁₋₄ -gegebenenfalls substituierten Kohlenwasserstoffgruppen (mit der Maßgabe, dass eines oder beide von R² und R³ eine zweiwertige Gruppe sein können, die mit dem N-Atom eines weiteren Aminoxidteils verbunden ist, wobei in dem weiteren Aminoxidteil die anderen Substituenten an NI ausgewählt sein können aus den hier für R², R³ und R¹ angegebenen Möglichkeiten), oder R² und R³ zweiwertige, gegebenenfalls durch ein Heteroatom unterbrochene Kohlenwasserstoffgruppen sind, die sich in Kombination mit dem N-Atom zu einem Ring verbinden, vorzugsweise in der R² und R³ beide Methyl, Ethyl oder 2-Hydroxyethyl sind und R¹ Alkyl mit 6 bis 18 Kohlenstoffatomen ist.

14. Verwendung gemäß Anspruch 11, 12 oder 13, wobei das Gemisch ein kompatibles wässriges Gemisch aus der Triazin-Scavenger-Verbindung und dem Aminoxid ist, und/oder wobei die Triazin-Scavenger-Verbindung und das Aminoxid in einem Verhältnis von 0,5 bis 20 Gewichtsteilen Aminoxid zu 100 Gewichtsteilen Triazin verwendet werden.

## Revendications

1. Procédé de traitement d'un fluide pour réduire le niveau de H₂S dans celui-ci, comprenant l'introduction dans le fluide d'un composé épurateur à base de triazine et d'un oxyde d'amine, dans lequel le composé épurateur à base de triazine et l'oxyde d'amine sont fournies sous la forme d'un mélange qui n'est introduit dans ledit fluide, dans lequel l'épurateur à base de triazine est un composé de la formule 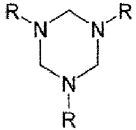 dans laquelle chaque R est sélectionné de manière indépendante parmi
des radicaux hydrocarbonés en C₁₋₄, des alkyles en C₁₋₆ à substitution hydroxy ou à substitution amino et des radicaux hydrocarbonés à substitution alcoxy.

2. Procédé selon la revendication 1 dans lequel R est -CH₂CH₂0H ou -CH₃.

3. Procédé selon la revendication 1 ou 2, dans lequel l'oxyde d'amine s'accorde avec la formule
R¹R²R³N →O
dans laquelle R¹ est un groupe lipophile avec une structure à longue chaîne présentant de 6 à 24 carbones et R² et R³ sont sélectionné de manière indépendante parmi les groupes hydrocarbonés en C₁₋₄ éventuellement substitués (à condition que l'un ou les deux de R² et R³ peuvent être un groupe divalent relié à l'atome d'azote d'une autre fraction d'oxyde d'amine dans laquelle ladite autre fraction d'oxyde d'amine, les autres substituants sur NI peuvent être sélectionnés parmi les options données ici pour R², R³ et R¹) ou R² et R³ sont des groupes divalents d'hydrocarbures, éventuellement interrompus par un hétéroatome, qui se joignent pour former un anneau en combinaison avec l'atome d'azote,

4. Procédé selon l'une quelconque des revendications précédentes, dans lequel à la fois R² et R³ sont méthyle, éthyle ou 2-hydroxyéthyle et R¹ est alkyle comportant de 6 à 18 atomes de carbone.

5. Procédé selon la revendication 1, dans lequel ledit mélange est un mélange aqueux compatible de composé épurateur à base de triazine et d'oxyde d'amine.

6. Procédé selon l'une quelconque des revendications précédentes, dans lequel le composé épurateur à base de triazine et l'oxyde d'amine sont utilisés dans un rapport de 0,5 à 20 parties en poids d'oxyde d'amine à 100 parties en poids de triazine.

7. Composition d'épurateur comprenant un mélange d'épurateurs d'H₂S à base de triazine avec l'oxyde d'amine dans lequel l'épurateur d'H₂S à base de triazine est un composé de la formule 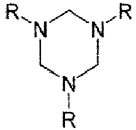 dans laquelle chaque R est sélectionné de manière indépendante parmi des radicaux hydrocarbonés en C₁₋₄, des alkyles en C₁₋₆ à substitution hydroxy ou à substitution amino et des radicaux hydrocarbonés à substitution alcoxy.

8. Composition d'épurateur selon la revendication 7 dans laquelle R est -CH₂CH₂0H or -CH₃.

9. Composition d'épurateur selon la revendication 7 ou 8, dans lequel l'oxyde d'amine s'accorde avec la formule
R¹R²R³N →O
dans laquelle R¹ est un groupe lipophile avec une structure à longue chaîne présentant de 6 à 24 carbones et R² et R³ sont sélectionné de manière indépendante parmi les groupes hydrocarbonés en C₁₋₄ éventuellement substitués (à condition que l'un ou les deux de R² et R³ peuvent être un groupe divalent relié à l'atome d'azote d'une autre fraction d'oxyde d'amine dans laquelle ladite autre fraction d'oxyde d'amine, les autres substituants sur NI peuvent être sélectionnés parmi les options données ici pour R², R³ et R¹) ou R² et R³ sont des groupes divalents d'hydrocarbures, éventuellement interrompus par un hétéroatome, qui se joignent pour former un anneau en combinaison avec l'atome d'azote, de préférence dans lequel à la fois R² et R³ are méthyle, éthyle ou 2-hydroxyéthyle et R¹ est alkyle comportant de 6 à 18 atomes de carbone.

10. Composition d'épurateur selon la revendication 7, 8 ou 9, dans laquelle ledit mélange est un mélange aqueux compatible de composé épurateur à base de triazine et d'oxyde d'amine et dans laquelle le composé épurateur à base de triazine et l'oxyde d'amine sont utilisés dans un rapport de 0,5 à 20 parties en poids d'oxyde d'amine à 100 parties en poids de triazine.

11. Utilisation d'un oxyde d'amine pour accroître l'effet épurateur d'H₂S d'un épurateur d'H₂S à base de triazine, procédé dans lequel l'épurateur d'H₂S et l'oxyde d'amine sont introduits en tant que mélange dans un fluide dans lequel la teneur en H₂S doit être réduite, dans lequel l'épurateur à base de triazine est un composé de la formule 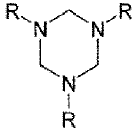 dans laquelle chaque R est sélectionné de manière indépendante parmi des radicaux hydrocarbonés en C₁₋₄, des alkyles en C₁₋₆ à substitution hydroxy ou à substitution amino et des radicaux hydrocarbonés à substitution alcoxy.

12. Utilisation selon la revendication 11 dans laquelle R est -CH₂CH₂0H or -CH₃.

13. Utilisation selon la revendication 11 ou 12, dans laquelle l'oxyde d'amine s'accorde avec la formule
R¹R²R³N →O
dans laquelle R¹ est un groupe lipophile avec une structure à longue chaîne présentant de 6 à 24 carbones et R² et R³ sont sélectionné de manière indépendante parmi les groupes hydrocarbonés en C₁₋₄ éventuellement substitués (à condition que l'un ou les deux de R² et R³ peuvent être un groupe divalent relié à l'atome d'azote d'une autre fraction d'oxyde d'amine dans laquelle ladite autre fraction d'oxyde d'amine, les autres substituants sur NI peuvent être sélectionnés parmi les options données ici pour R², R³ et R¹) ou R² et R³ sont des groupes divalents d'hydrocarbures, éventuellement interrompus par un hétéroatome, qui se joignent pour former un anneau en combinaison avec l'atome d'azote, de préférence dans lequel à la fois R² et R³ are méthyle, éthyle ou 2-hydroxyéthyle et R¹ est alkyle comportant de 6 à 18 atomes de carbone.

14. Utilisation selon la revendication 11, 12 ou 13, dans laquelle ledit mélange est un mélange aqueux compatible de composé épurateur à base de triazine et d'oxyde d'amine et dans laquelle le composé épurateur à base de triazine et l'oxyde d'amine sont utilisés dans un rapport de 0,5 à 20 parties en poids d'oxyde d'amine à 100 parties en poids de triazine.
